Europäisches Patentamt

European Patent Office

Office européen des brevets

(19)

(11) Publication number: **0 047 394
B1**

(12)

# EUROPEAN PATENT SPECIFICATION

(45) Date of publication of patent specification: **25.06.86**

(51) Int. Cl.⁴: **G 01 M 15/00, F 02 P 5/04**

(21) Application number: **81106002.9**

(22) Date of filing: **30.07.81**

(54) **Engine knock control apparatus.**

(30) Priority: **14.08.80 JP 110999/80**

(43) Date of publication of application:
**17.03.82 Bulletin 82/11**

(45) Publication of the grant of the patent:
**25.06.86 Bulletin 86/26**

(84) Designated Contracting States:
**DE FR GB**

(56) References cited:
**GB-A-2 009 406
GB-A-2 030 644
GB-A-2 049 238
GB-A-2 051 223
US-A-3 950 981
US-A-4 111 035
US-A-4 240 388**

(73) Proprietor: **Hitachi, Ltd.
5-1, Marunouchi 1-chome
Chiyoda-ku Tokyo 100 (JP)**

(72) Inventor: **Kashimura, Yuichi
206-11, Inada Katsuta-shi
Ibaraki (JP)**
Inventor: **Suda, Seiji
2649-83, Motoyoshida-cho Mito-shi
Ibaraki (JP)**
Inventor: **Sugiura, Noboru
2593-110, Tsuda Katsuta-shi
Ibaraki (JP)**

(74) Representative: **Patentanwälte Beetz sen. -
Beetz jun. Timpe - Siegfried - Schmitt-Fumian
Steinsdorfstrasse 10
D-8000 München 22 (DE)**

Courier Press, Leamington Spa, England.

## Description

This invention relates to an engine knock control apparatus which detects knocking of an internal combustion engine by means of a knock sensor and controls the spark timing in dependence of the detected knock signal.

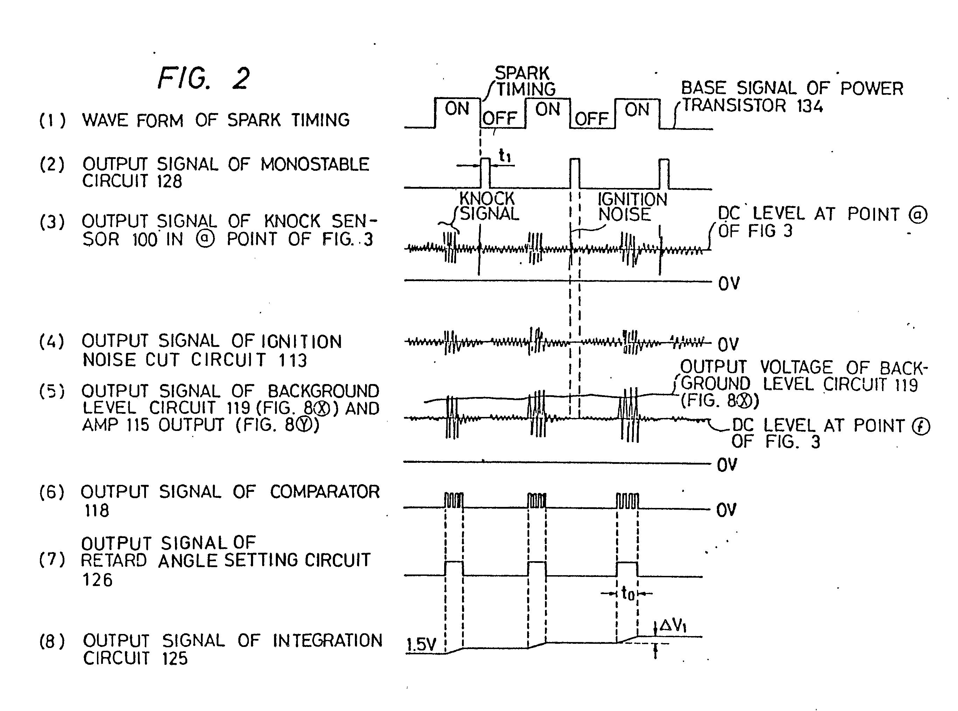

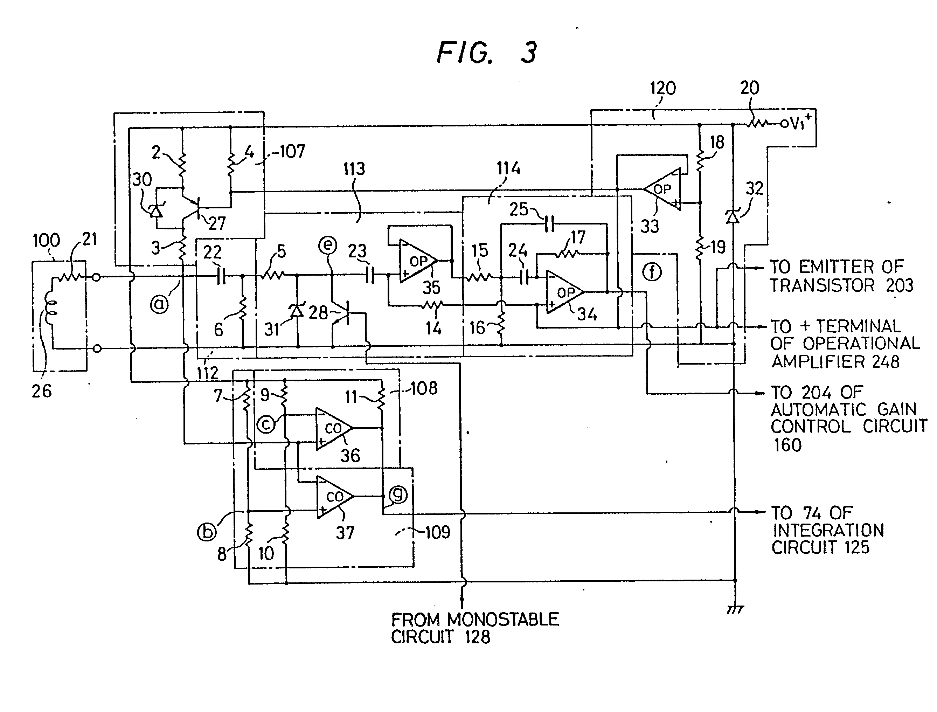

An engine knock control apparatus of this kind is known for example from the US Patent 4 111 035. Fig. 3 of this US Patent shows an engine knock signal generating apparatus with noise channel inhibiting feedback. This apparatus comprises a vibration sensor generating knock-induced vibrations at a characteristic frequency and other vibrations which is tuned to resonate at substantially the characteristic frequency, a band-pass filter tuned to the characteristic frequency for removing noise components which is connected to the vibration sensor output, and the output of which is provided to one input of a comparator, a noise reference generator receiving its input partly from the bandpass filter and partly, via a summing junction, from a low pass filter which receives its input from the output of the comparator, the other input of the comparator being connected to the output of the noise reference generator. This known device does not comprise any means for controlling the amplification ratio of the knock sensor output signal.

The knock signal detected by the knock sensor generally involves amplitude fluctuations of as large as from ±5 to ±600 mV irrespective of the kind of the knock sensor. In order to correctly detect and discriminate the knock signal, therefore, the signal must be leveled up to a discriminating level by use of an amplifier. If the detection signal is merely amplified by usual amplifier circuits, however, the detection signal cannot be amplified up to a level that exceeds the battery voltage employed as a power source of the amplifier, its maximum voltage being determined by the battery voltage.

If the gain of the amplifier is kept at a high level, the amplifier output would saturate at excessive knock signals, whereby an excessively large knock control signal is generated from the comparator and proper knock control becomes impossible. If the gain of the amplifier is kept at a low level, on the contrary, an excessively small knock control signal would be generated from the comparator at small knock signals, whereby proper knock control becomes impossible, either. For these reasons, conventional engine knock control apparatus are not sufficiently reliable.

Furthermore, the US Patent 3 950 981 discloses an automatic system for suppressing the ground noise of an engine knock detecting apparatus. This system is based on the principle that the ground noise occurring together with the knocking may be correlated with the noise level present in the residual time interval of the same engine cycle, preceding the one of the knock rise. To compensate for the ground noise signal a signal proportional to the noise intensity present in that part of the cycle preceding the knocking is simply subtracted for the total signal.

It is therefore the object of the present invention to provide an engine knock control apparatus having high reliability and generating a proper knock control signal at the comparator output irrespective of the amplitude of the knock signal.

The above mentioned object is accomplished according to claim 1. The subclaims refer to preferred embodiments.

The engine knock control apparatus according to the invention comprises

— a knock sensor detecting engine knocking and producing a knock signal as output,
— a bandpass filter receiving the knock signal,
— a first amplifier amplifying the knock signal from the bandpass filter and providing an amplified knock signal,
— an integrator receiving the knock signal and providing an integrated output signal,
— and a first comparator receiving and comparing the integrated output signal of the integrator and the amplified knock signal thus providing a spark timing control signal to an ignition control device controlling the ignition timing of an ignition coil

and is characterized by

— an automatic gain control circuit receiving and amplifying the knock signal from the bandpass filter,
— the integrator and the first amplifier being connected to receive the output signal from the automatic gain control circuit,
— a knock signal clamping circuit which is disposed between the automatic gain control circuit and the integrator and clamps the output signal of the automatic gain control circuit and prevents an abnormal rise of the signal voltage of the integrator,
— a second amplifier receiving the integrated output signal and negatively feeding it back to the automatic gain control circuit,

which controls the amplification ratio of the knock signal in accordance with the level of the integrated output signal.

The engine knock control apparatus of this invention is accordingly equipped with an automatic gain control system as a pre-stage circuit to the comparator for making constant the gain of the amplifier in proportion to the ratio of the amplitude of the knock signal to the amplitude of the background level (input signal ratio), the background level being obtained by averaging the knock signals at the time of amplifying the knock sensor output.

It has been confirmed according to the experimental results obtained by the inventors of the present invention that the input signal ratio is substantially independent of the amplitude of the knock signals and remains constant. On the basis of these experimental results, the present invention provides an engine knock control apparatus having high reliability by controlling the gain of the amplifier to a constant level in correspondence to the input signal ratio, thereby making it possible to obtain a proper knock control signal from the comparator irrespective of the amplitude of the knock signal.

The engine knock control apparatus includes the knock signal clamping circuit provided in a background level circuit.

This knock signal clamping circuit, which as such is the object of the European divisional application 84103811.0 prevents an abnormal rise of the voltage of the background level circuit and stabilizes the knocking detection performance. Thereby the reliability is improved. In the following, the invention is explained with reference to the drawings, whereby are:

Fig. 1: A block diagram showing the overall construction of the apparatus;

Fig. 2: waveform diagrams showing the signal waveforms at different portions of the apparatus of fig. 1 in a time chart;

Fig. 3: a circuit diagram showing in detail a circuit which includes the knock sensor, the fail-safe device, the condensor coupling circuit, the ignition noise cut circuit and the bandpass filter shown in fig. 1;

Fig. 4: characteristic diagrams of the resonance circuit consisting of the knock sensor and the condensor coupling circuit shown in fig. 3;

Fig. 5: a circuit diagram showing another circuit construction of the knock sensor;

Fig. 6: a block circuit diagram comprising the automatic gain control circuit, the background level circuit, the comparator and the amplifier, that are shown in fig. 1;

Fig. 7: a characteristic diagram showing the dependence of the output level of the automatic gain control circuit on the input signal level according to the block diagram of fig. 6;

Fig. 8: a detailed circuit diagram of the block diagram shown in fig. 6;

Fig. 9: a diagram useful for explaining the automatic gain control operation of the circuit shown in fig. 8;

Fig. 10: a circuit diagram of the retard angle setting circuit shown in fig. 1;

Fig. 11: waveform diagrams showing the signal waveforms at different portions of the circuit shown in fig. 10 in a time chart;

Fig. 12: a circuit diagram of a circuit including the integration circuit and the advance angle setting circuit shown in fig. 1;

Fig. 13: a spark timing characteristic diagram of the spark timing of the apparatus;

Fig. 14: a characteristic diagram of the retard circuit used in the apparatus and

Fig. 15: waveform diagrams obtained with an abnormal voltage superposed at point (a) in fig. 3.

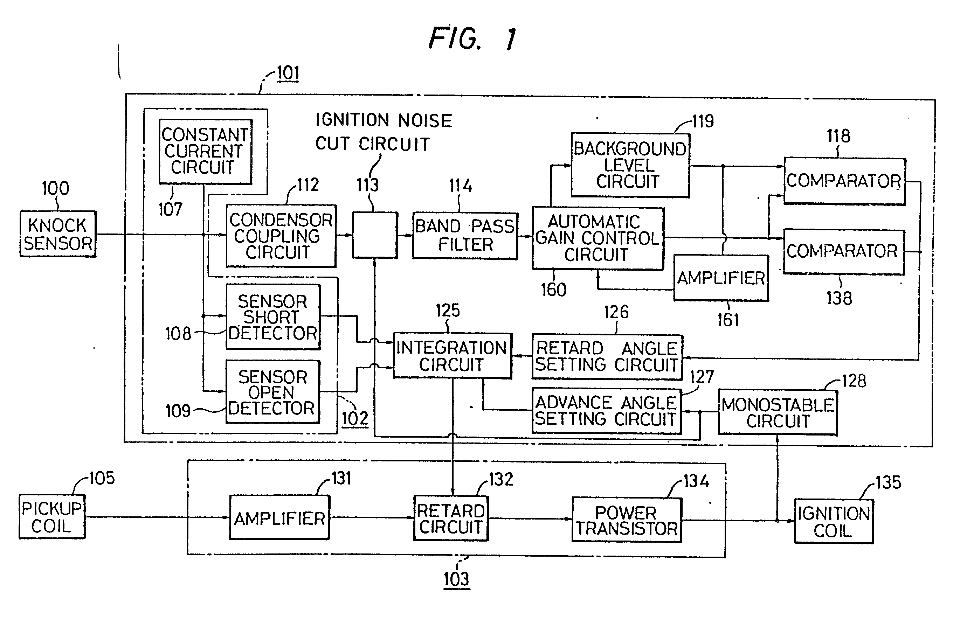

The engine knock control apparatus shown in fig. 1 comprises a knock sensor 100 for detecting knocking and producing a knock signal, a knock control apparatus 101 for generating a control signal for controlling the spark timing of the ignition coil 135 by means of the knock signal applied thereto from the knock sensor 100, a pick-up coil 105 for detecting the spark timing of the ignition coil 135 and a contactless ignition control device 103 for igniting the ignition coil 135 by means of the output from the pick-up coil 105 and that of the knock control apparatus 101 and for delivering a feedback signal to the knock control apparatus 101.

The knock control apparatus 101 receives the detection signal of the knock sensor 100 and the output signal of the contactless ignition control device 103 and controls the ignition control device 103 in accordance with the magnitude of knocking, thereby allowing the ignition control device to perform retard angle control.

The knock control apparatus 101 comprises a fail-safe device 102 (object of the European divisional application 84103812.8) for detecting faults of the knock sensor 100 and delivering a signal for compulsively retarding the angle of the spark timing, a condensor coupling circuit 112 for removing d.c. components, an ignition noise cut circuit having a gate for cutting the spark noise in synchronism with the spark timing, a bandpass filter (BPF) 114 for filtering the knock signal, an automatic gain control (AGC) circuit 160 for controlling the gain of an amplifier of its own in proportion to the input signal ratio by means of the output of the BPF 114, a background level (BGL) circuit 119 for obtaining a mean value of the knock signal by means of the input from the AGC circuit 160, an amplifier 161 for amplifying the output of the BGL circuit 119 and feeding it back to the AGC circuit 160, a first comparator 118 for comparing the BGL output signal with the output signal of the AGC circuit 160 and generating a retard angle signal proportional to the knocking signal, a second comparator 138 using a pre-set voltage as a reference signal, a retard angle setting circuit 126 for logically operating the AND between the output of both comparators 118, 138 and setting the retard angle signal in proportion to the knocking, a monostable circuit such as a multivibrator 128 for generating a signal of a predetermined pulse width in synchronism with the cut of the ignition coil 135 by means of the signal from the ignition control device 103, an advance angle setting circuit 127 for generating a signal for advancing the angle of the spark timing of the ignition coil 135 at a predetermined voltage/period ratio during the period in which the output pulse of the monostable circuit 128 is being generated, and an integration circuit 125 for generating a d.c. voltage proportional to the retard angle signal set in the retard angle setting circuit 126 and to the advance angle signal set in the advance angle setting circuit 127 and compulsively retarding the angle of the spark timing of the ignition coil 135 by means of the output from the fail-safe device 102.

The fail-safe device 102 has a fail-safe function to detect various fault or abnormal modes of the knock sensor 100 and allows it to perform the retard angle control in accordance with the detected mode. The fail-safe device 102 consists of a constant current circuit 107, a sensor short detector 108 and a sensor open detector 109 and provides the output of each circuit of the integration circuit 125, thereby performing the fail-safe function.

The BGL circuit 119 generates an averaged signal at the output.

The ignition control device 103 consists of an amplifier 131 for wave-shaping the output signal of the pickup coil 105, a retard circuit 132 for controlling the spark timing in accordance with the output voltage of the knock control apparatus 101 and a power transistor 134 for switching the ignition coil 135 and for generating a high voltage on its secondary side. Next, the operation of the above-mentioned construction will be described on the basis of the waveform diagrams shown in fig. 2.

Fig. 2(1) shows the spark timing waveform. In practice, this waveform signal is the base signal to the power transistor 134 of the ignition control device 103. The power transistor 134 is turned ON at an H level and is turned off at an L level. The spark is generated by the ignition coil 135 in the transient period in which the transistor 134 is switched from ON to OFF. Fig. 2(2) shows the output signal of a predetermined pulse width of the monostable circuit 128 which receives the base signal as the input and is triggered when the transistor changes from ON to OFF thereby to generate a pulse signal of a predetermined width $t_1$. Fig. 2(3) shows the boosted output of the knock sensor 100. The signal detected by the knock sensor 100 are those which change to positive and negative with a d.c. zero level as the reference. The knock signal is included in these detected signals. On the other hand, the sensor short detector 108 and the sensor open detector 109 are provided in order to realize a fail-safe operation. If these detectors are not normally operating, the mode detection is not possible if the signal is one of the above-mentioned d.c. zero level signals. To cope with this problem there is disposed the constant current circuit 107. When a constant current from the constant current circuit 107 overlays the output of the sensor 100, a predetermined biasing is effected in positive direction. This constant current circuit 107 plays an important role, since without the constant current circuit 107 the output of the knock sensor 100 changes within the range of ±5 to ±600 mV, i.e. by a factor of up to 120.

If the knock d.c. impedance is 840Ω and the inductance L=1 H, the a.c. impedance at 7 kHz is about 44 kΩ. If the knock sensor output is to be leveled up by ordinary bias means using resistor voltage division for the purpose of d.c. level-up such as by about 1.6 V in the above-mentioned case, biasing from the 6 V power source using a resistor of about 2.3 kΩ is necessary. In this case, the damping ratio of the a.c. signal at the 7 kHz output of the knock sensor by the bias means consisting of a 2.3 kΩ resistor is about 1:20, and the output after biasing when the knock sensor output is ±5 mV drops to 0.25 mV. It is obviously that this lowers the detection accuracy, and detection of the fault mode becomes impossible in the worst case. The constant current circuit 107 improves the knock detection accuracy and facilitates the fault mode detection.

Fig. 2(3) shows the sensor output which is biased by the constant current circuit 107.

The condensor coupling circuit 112 is disposed in order to remove d.c. components. Further, the circuit has the function of causing resonance in the knocking frequency range. The removal of the d.c. bias by the condensor coupling circuit 112 contributes remarkably to the improvement in the noise cut performance in the following ignition noise cut circuit 113, since the ignition noise cannot be cut unless the d.c. bias is first removed.

The ignition noise cut circuit 113 is controlled by the pulse output of the monostable circuit 128 such as shown in fig. 2(2). The ignition noise cut circuit 113 is a kind of AND gate and converts the output pulse of the monostable circuit 128 into a gate signal. Accordingly, only during the period $t_1$ in which the output pulse of the monostable circuit 128 is "1", the sensor output obtained via the condensor coupling circuit 112 is clamped at about 0 V. Thus, the ignition noise is cut.

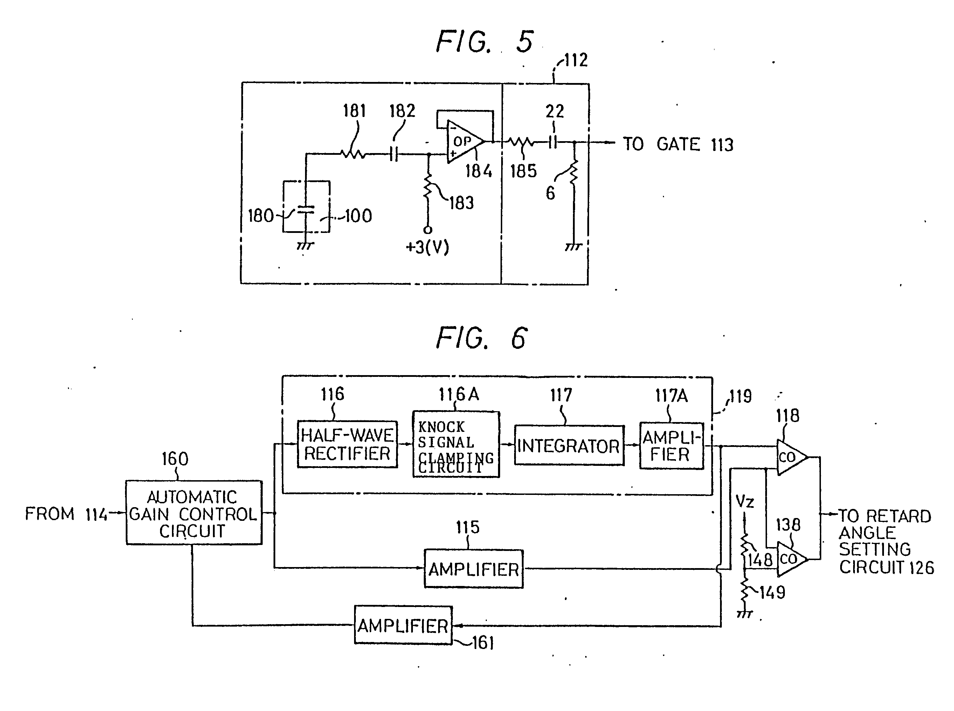

The BPF 114 generates the knock signal by emphasizing it (or by damping the other signals), and has such a characteristic that considerable damping occurs at frequencies higher than the knock signal due to knocking. In the present invention, the BPF 114 may be changed to an amplification circuit. The amplifier 115 (fig. 6, 8) receives the output of the BPF 114 and amplifies it with a predetermined gain. Upon receiving the output of this amplifier 115, the BGL circuit 119 detects the BGL. The comparator 118 compares the output voltage of the BGL circuit 119 (fig. 8, position (X)) with the output voltage at position (Y) in fig. 8. The conditions of both signals at this time are shown in fig. 2(5). The comparator 118 shapes only the output of the amplifier 115 greater than the output of the BGL circuit 119. The AND output between the comparator 118 and a comparator 138, which is disposed in order to prevent the comparator 118 from detecting small signals other than the knock signal as if they were the knock signal, as will be later described, is applied to the retard angle setting circuit 126 and is converted into a d.c. level signal, which is the knock signal to be determined.

Fig. 2(6) shows the knock signal detected by the comparator 118 and fig. 2(7) is a partially enlarged view of this knock signal. If the operation of the comparator 138 is hereby neglected, the integration circuit 125 receives the output signal of the retard angle setting circuit 126 and integrates the pulse only when the pulse is at the high level "1" (fig. 2(7)). Accordingly, an integration value corresponding to the number of pulses is produced from the integration circuit 125. Fig. 2(8) shows the output of the integration circuit 125. The retard angle control is effected in the retard circuit 132 by means of this output of the integration circuit 125.

Fig. 3 shows a definite construction of the circuit ranging from the knock sensor 100 to the BPF 114 of the overall construction shown in fig. 1. The knock sensor 100 is an induction type sensor using a magnetostriction element and equivalently, is a series circuit consisting of an inductance 26 and a resistor 21. Generally, the value of the inductance 26 is 1 H and that of the resistor 21 approximately 840 $\Omega$.

The constant current circuit 107 consists of resistors 2, 3, 4, a Zener diode 30 and a transistor 27. The power to this circuit 107 is supplied from a power source 120. The power source 120 consists of resistors 20, 18, 19, a Zener diode 32 and an operational amplifier 33, which plays the role of a buffer. The Zener voltage of the Zener diode 32 is set to 6 V and the output of the operational amplifier 33 to 3 V. The collector current of the PNP transistor 27 is set to approximately 1.9 mA. Accordingly, the d.c. bias voltage at the point (a) becomes about 1.6 V and the output signal of the knock sensor 100 overlays this voltage of 1.6 V.

The constant current circuit 107 is employed for the following reason.

The output impedance Z of the knock sensor 100 is determined by the values of the resistor 21 and the inductance 26. Accordingly, the value of the impedance Z at a knocking frequency f of approx. 7 kHz is given as follows:

$$Z=2\pi fL+R_{21}$$
$$=2\pi\times7,000\times1+840 \qquad (1)$$
$$=45 \text{ k}\Omega$$

If the input impedance of the knock sensor connecting portion of the knock control apparatus 101 is low, the knock sensor output signal is drastically attenuated. The knock sensor output varies within the range from $\pm5$ to $\pm600$ mV, i.e. by a factor of up to 120.

The constant current circuit 107 is disposed to enhance the input impedance. Especially in the construction shown, the d.c. bias circuit is formed in the constant current arrangement and hence, the impedance value of this d.c. bias circuit becomes approximate by infinite.

On the other hand, disturbance noise is likely to overlap if the input impedance of the knock control apparatus is increased. A typical example of such a disturbance noise is the ignition noise (Ig noise) occurring in synchronism with the spark timing.

Here, the ignition noise will be discussed.

The base control of the power transistor 134 is effected by use of the pulse such as shown in fig. 2(1). When this pulse is at the H level, the power transistor is turned ON; it is turned OFF when the pulse is at the L level. During the transient period in which the transistor changes from ON to OFF or at the point when the transistor is turned OFF. The secondary voltage of the ignition coil is drastically elevated which generates primary noise. Due to further elevation of this secondary voltage, breakdown of the gas layer between the plug electrodes occurs and ignition takes place. The secondary noise occurs at this time of ignition. The secondary noise can be divided into a noise due to capacitance discharge current flowing at the initial stage of the ignition and a noise due to an induction discharge current flowing at the later stage. The former becomes the major noise source among the secondary noise. When the input impedance is increased, the primary noise and the secondary noise (the former noise) overlap the above-mentioned knock sensor output as the disturbance noises that exert adverse influences on the knock signal discrimination. Hence, the disturbance noises must be removed. The disturbance noises continue over a period of about 50 to 60 µs. Hence, the knock sensor output may be masked during this period. To accomplish this object, the condensor coupling circuit 112 and the ignition noise cut circuit 113 are provided. However, the practical mask zone is set to a time width sufficiently greater than the above-mentioned noise continuation period such as about 0.8 ms., for example.

The condensor coupling circuit 112 consists of a capacitor 22 and a resistor 6. The ignition noise cut circuit 113 consists of resistors 5, 14, a Zener diode 31, a capacitor 23, a transistor 28 and an operational amplifier 35. The condensor coupling circuit 112 is provided as means for taking out the knock signal from the knock sensor output signal in a satisfactory manner. As the knocking signal is passed through this condensor coupling circuit 112, the d.c. bias voltage overlapping the knock sensor output signal is removed. When only the knock signal is to be taken out from the knock sensor output overlapping the d.c. bias component and when the above-mentioned noise mask is to be applied, the treatment becomes extremely complicated. The concept of d.c. cutting itself is simple and is extremely practical technique in order to correctly discriminate the knock signal.

The ignition noise cut circuit 113 performs Ig noise cut primarily by means of the operation of the transistor 28. The transistor 28 is turned on and off by the output of the monostable circuit 128, which is a monostable multivibrator. As shown in fig. 2(1), the monostable multivibrator 128 is triggered by the fall of the base signal of the power transistor, thereby generating a pulse of a mask zone width. Fig. 2(2) shows the output of this monostable multivibrator 128 whose mask zone width is the time interval $t_1$. The transistor 28 is turned on only in the time interval $t_1$ in which the output of this monostable multivibrator 128 becomes "1". During this time interval $t_1$, therefore, the knock sensor output is short-circuited and the operational amplifier 35 has no input signal, whereby the Ig noise is masked. The circuit of fig. 3 comprises resistors 5, 6, 14 and capacitors 22, 23 as the load impedance of the sensor 100, however, the resistors 5, 14 and the capacitor 23 can be omitted if the resistor 14 has a high resistance such as 1 MΩ, for example. Accordingly, it is possible that the load of the sensor 100 consists only of the capacitor 22 and the resistor 6.

For the above-mentioned reasons, the condensor coupling circuit 112 also has the function of a resonance circuit for stressing and taking up the knock signal among the knock sensor output therefrom in addition to its role of removing the d.c. component. This will be described in further detail.

As described above, the resistors 5, 15 and the capacitor 23 can be neglected as the load when the knock control apparatus is viewed from the side of the knock sensor 100 by selecting a high resistance for the resistor 14. Hence, the load is only the condensor coupling circuit 112. In other words, the resonance circuit is formed solely by the knock sensor 100 and the condensor coupling circuit 112, i.e., by a circuit consisting of the inductance 26, the resistor 21, the capacitor 22 and the resistor 6. The resonance circuit is capable of acting as a by-pass filter which damps (by approx. 5 dB) the 3—5 kHz engine oscillation with respect to the knock signal (approx. 7 kHz). The gain G at this time is given by the following equation:

$$G = 20 \log \frac{\omega R_6 C_{22} e^{j(\pi/2 - \theta_1)}}{\sqrt{(1 - \omega^2 L_{20} C_{22})^2 + \{\omega(R_{21}C_{22} + R_6 C_{22})\}^2}} \quad (2)$$

$$\tan \theta = \frac{\omega C_{22}(R_{21} + R_6)}{1 - \omega^2 L_{26} C_{22}} \quad (3)$$

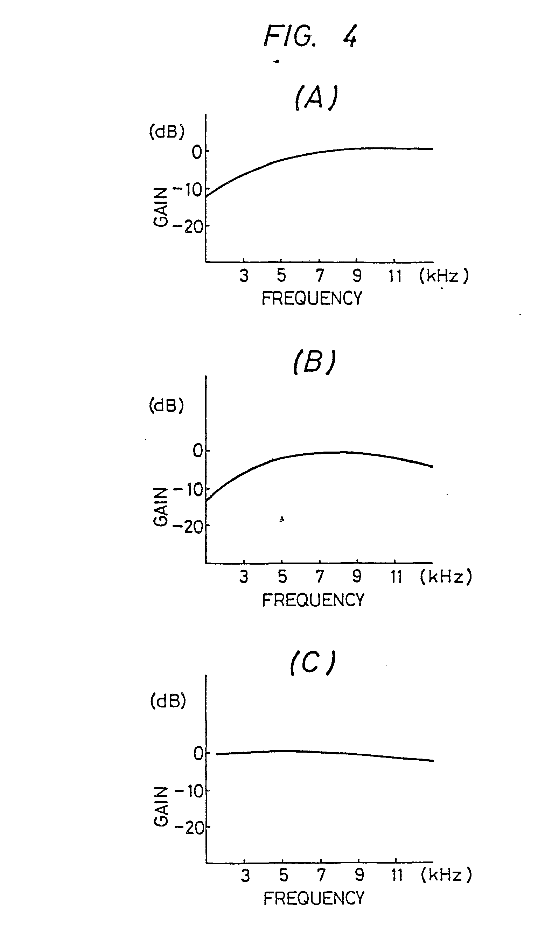

Fig. 4 shows the characteristics of the resonance circuit thus obtained. Fig. 4(A) shows the by-pass filter characteristic when the capacitance of the capacitor $C_{22}$ is as large as 100 pF. Fig. 4(B) shows the characteristic when the capacitance of the capacitor $C_{22}$ is increased to 470 pF. It also shows the band-pass filter characteristic.

The practical resonance circuit has a band-pass filter characteristic which corresponds approximately to that shown in fig. 4(B). Incidentally, when the value of the capacitor $C_{22}$ is 470 pF and that of the resistor 6 is 20 kΩ, the resonance frequency is 7 kHz and the circuit exhibits the desired band-pass filter characteristic.

Fig. 5 shows a circuit diagram in which a piezoelectric sensor 100 is disposed in place of the knock sensor using a magnetostriction element. Equivalently, this piezoelectric sensor 100 consists of a capacitor 180. The characterizing feature of this construction resides in the connection between the piezoelectric sensor 100 and the capacitor 22. Namely, in this construction, a series circuit of a resistor 181 and a capacitor 182 is disposed and a reference voltage of +3 V is impressed via a high resistor 183 (approx. 1 MΩ). Furthermore, the reference voltage and the output of the knock sensor 100 via the capacitor 182 are impressed upon the positive terminal of the operation amplifier 184. The reason why the reference voltage is applied via the high resistor 183 is to bring the knock sensor output into the operating range of the operational amplifier 184. The capacitor 182 takes only the a.c. output from the piezoelectric sensor 100.

The BPF 114 (fig. 3) consists of the resistors 15, 16, 17, the capacitors 24, 25 and the operational amplifier 34. The non-inverting terminal of this operational amplifier 34 is connected to the output (3 V reference voltage) of the operational amplifier 33 of the power source 120 having the function of a buffer. Accordingly, the output of the BPF 114 is d.c.-wise biased by the reference voltage. The BPF 114 has the filter function which increases the level difference between the knock signal and the non-knock signals. This facilitates the discrimination by means of the corresponding levels. The output of the operational amplifier 34 of the BPF 114 is applied to a resistor 204 of an AGC circuit 160 shown in fig. 8 that will be described elsewhere.

Next, the operation of the knock sensor fault detection circuit will be described with reference to fig. 3. The sensor short detector 108 consists of the resistors 9, 10, 11 and the comparator 36. The sensor open detector 109 consists of the resistors 7, 8 and the comparator 37. It will hereby be assumed that the potential at point (c) of the comparator 36 is set to approximately 0.2 V and the potential at the point (b) of the comparator 37 to approximately 28 V. If the knock sensor 100 is short-circuited at this instance, the potential at the point (a) becomes approximately 0 V. Accordingly, the potential at the point (a) becomes lower than that at the point (c) and the output of the comparator 36 becomes approximately 0 V. In the normal operation of the knock sensor 100 in which it is not short-circuited, the potential at the point (a) is set to a level higher than at the point (c) by the d.c. bias so that the output of the comparator 36 is at the H level (approx. 6 V). On the other hand, when the knock sensor 100 becomes open, the voltage at the point (a) is about 3.2 V and is higher than that at the point (b). Hence, the output of the comparator 37 becomes 0 V. That is to say, when the knock sensor is disconnected or short-circuited, the voltage at the point (g) becomes 0 V and the output to the integrator 125 becomes also 0 V. In this manner, short-circuit and open fault can be detected by the comparators 36, 37.

Fig. 6 shows a block diagram of a circuit for processing the knock sensor output. The circuit includes the AGC circuit 160, the BGL circuit 119, the amplifiers 115, 161 and the comparators 118, 138. One of the features of the circuit shown in fig. 6 resides in the circuit construction between the AGC circuit 160 and the comparator 118: The output of the BPF 114 is applied to the AGC circuit 160. The output of the AGC circuit 160 is divided into two systems. The first system consists of the amplifier 115 which amplifies the knock signal and impresses it to one of the input terminals of the comparator 118. The second system is the BGL circuit 119 consisting of a half-wave rectifier 116, a knock signal clamping circuit (maximum clamping circuit) 116A, an integrator 117 and an amplifier 117A. The output of the amplifier 117A is applied to the other input terminal of the comparator 118. The output of the amplifier 117A is negatively fed back to the AGC circuit 160 via the amplifier 161.

The knock sensor output ranges from ±5 to 600 mV. In other words, the sensor output varies by a factor of up to 120. If this output is merely amplified (100 times, for example), the range becomes ±0.5 to ±60 V. In a car, however, the maximum voltage is the battery voltage (approx. 12 V) and voltages such as 60 V do not exist. For this reason, it has been a customary practice either to carry out processing with such a gain that no saturation occurs or to carry out processing while saturation is sufficiently taken into account as being unavoidable. The former method results in lowering the sensitivity for a weak input while the latter also results in lowering the sensitivity with respect to an input of large amplitude. The construction shown in fig. 6 is characterized according to the invention in that the AGC circuit 160 and the BGL circuit are disposed on the output side of the BPF circuit 114. According to this circuit construction, the level difference between the knock signal and the non-knock signals is increased in the BPF 114 and the signal is impressed upon the AGC circuit 160 with this increased level difference so that an output having a high S/N ratio can be obtained. Further, since the knock signal clamping circuit 116A is disposed, an abnormal rise of the voltage in the BGL circuit 119 can be prevented.

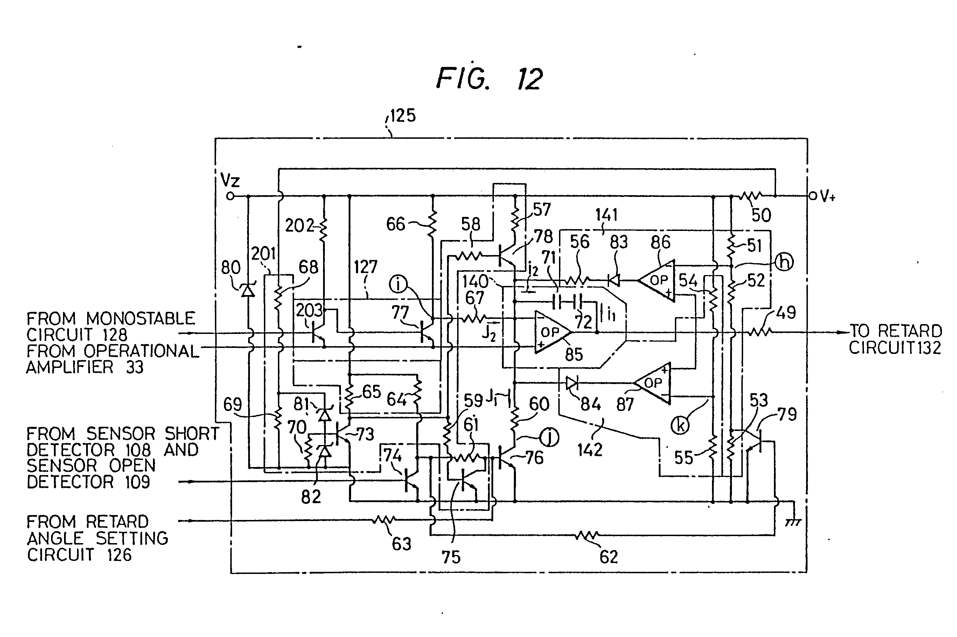

Another feature of the circuit shown in fig. 6 resides in disposition of the second comparator 138. The inverting input terminal of this second comparator 138 is connected to a voltage $V_z$ (indicated in fig. 12) that is set in advance by voltage division by the resistors 148 and 149. The non-inverting input terminal of the comparator 138 is connected to the non-inverting input terminal of the comparator 118. The output of these comparators 118, 138 is applied to the retard angle setting circuit 126. The AGC circuit 160 so operates as to control the BGL output to a constant level, but there is a limit to the amplification ratio that can be set. Accordingly, the BGL output voltage does not sufficiently rise if the knock sensor output signal is small at the low-speed operation of the engine. Hence, there is the possibility that the comparator 118 would detect small signals other than the knock signal as if they were the knock signal. However, if the inverting input terminal of the comparator 138 is set to a voltage $V_{co}$ required for detecting the original knock signal, priority is given to the output of the comparator 138 when the BGL output is lower than the set voltage $V_{co}$ and the knocking pulse is generated in the retard angle setting circuit 126 for the original knock signal, because the comparators 118 and 138 are disposed in the AND arrangement. When the number of revolutions of the engine increases with such a consequence that the level of the BGL voltage becomes higher than the level of the set voltage $V_{co}$ and the knock signal reaches a level at which accurate detection is possible, priority is given to the output of the comparator 118 and the signal is applied to the retard angle setting circuit 126.

According to the experiments, on the other hand, it has been confirmed that knock signal detection can be made in a satisfactory manner if the knock signal of the comparator 118 is so set as to be higher by approximately 0.5 V than the set voltage $V_{co}$.

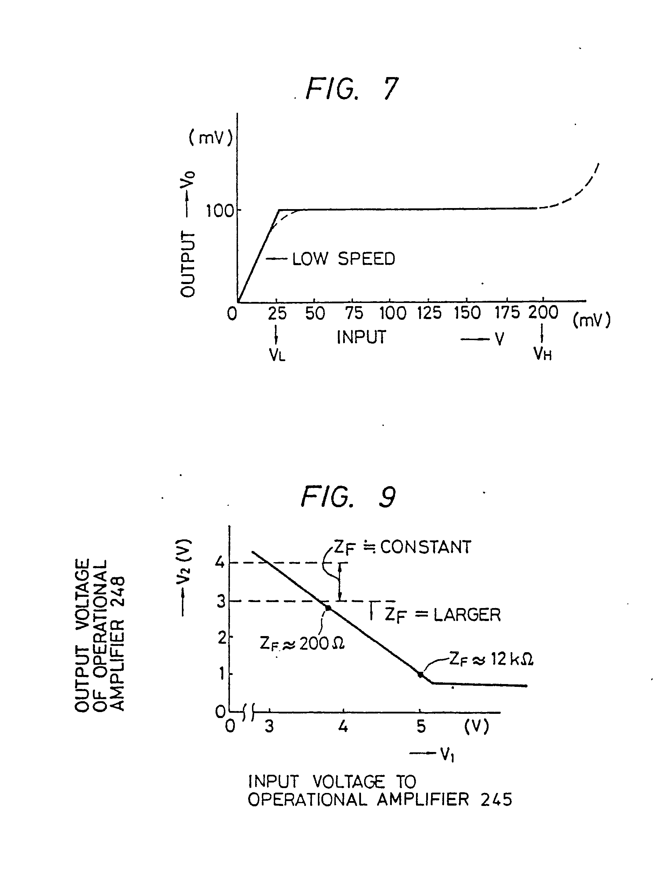

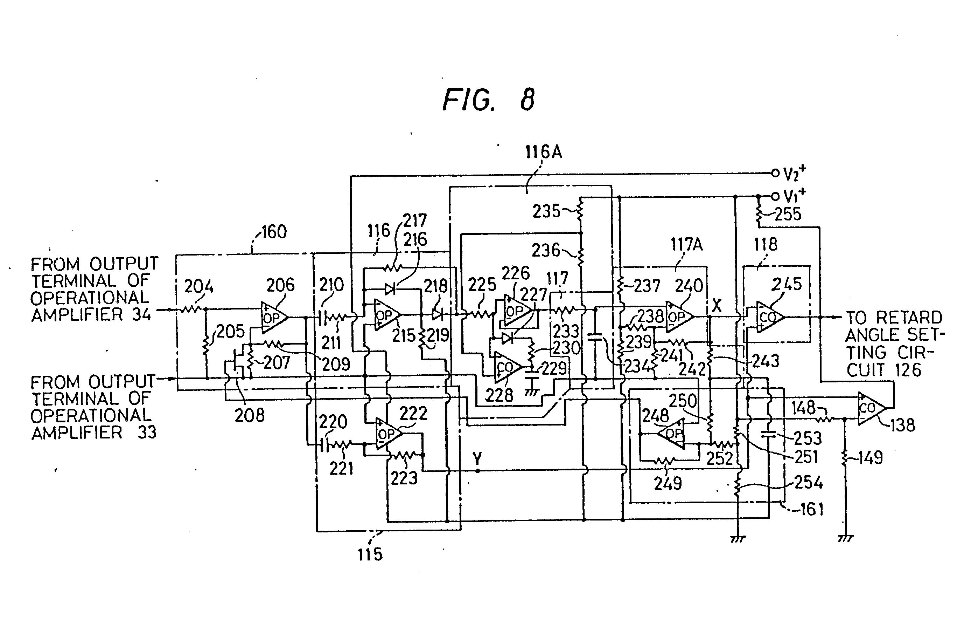

As shown in fig. 7, the AGC circuit 160 is capable of controlling the output thereof to a constant level except for the low level input ($\pm V_L$) and the high level input ($\pm V_H$).

Referring to fig. 8, the AGC circuit 160 consists of resistors 204, 205, 207, 209, an operational amplifier 206 and an FET 208. The half wave rectifier 116 consists of a capacitor 210, resistors 211, 217, 219, diodes 216, 218 and an operational amplifier 215.

The knock signal clamping circuit 116A consists of resistors 225, 230, an operational amplifier 226, a comparator 228, a capacitor 229 and resistors 235, 236. The integrator 117 consists of a resistor 233 and a capacitor 234. The amplifier 117A consists of resistors 237, 238, 239, 241, 242, an operational amplifier 240 and a resistor 243. The amplifier 161 consists of an operational amplifier 248, resistors 250, 251, 252, 249, and a capacitor 253.

Next, the operation of the circuit shown in fig. 8 will be described. Since the resistance of the resistor 207 is high, the amplification ratio of the operational amplifier 206 is determined by the drain-source impedance $Z_F$ of the FET 208 and the resistor 209; the resulting gain G is given by the following equation:

$$G = \frac{V_o}{V_i} \approx (1 + \frac{R_{209}}{Z_F}) \qquad (4)$$

where $V_i$ is the input voltage of the AGC circuit 160 (or the output voltage of the BPF 114) and $V_o$ is the output voltage of the AGC circuit 160.

It is of importance in connection with equation (4) that the drain-source impedance $Z_F$ of the FET 208 depends on its gate-source voltage $V_{GS}$. When $V_{GS}$ drops from 0 V to −2 V, for instance, $Z_F$ becomes great due to the output feedback of the amplifier 161, whereas the gain G becomes small. When $Z_F$ becomes small, the gain G becomes great, on the contrary. As a result, the output voltage of the BGL circuit 119 obtained from the amplifier 117A of the AGC circuit 160 becomes constant irrespective of the fluctuation of the input voltage and its S/N ratio becomes approximately constant. Within the range of $V_i = \pm 200$ mV, the AGC operates sufficiently. Incidentally, the resistor 207 having a high resistance is disposed to protect the FET 208 against disconnection damage or defect. Further, the drain-source impedance $Z_F$ has a value of approximately $200\Omega$ to approximately $2\,k\Omega$.

Further, the resistor 243 and the capacitor 253 have a ripple preventing function for the BGL. In the overall circuit diagram, the operational amplifier (OP) can be a HA 17902 and the comparator (CO) a HA 17901, each of Hitachi Ltd. (The same applies also for fig. 3 and 12).

When no BGL input exists, the + terminal of the operational amplifier 248 is connected to the output terminal (3 V) of the operational amplifier 33 and hence, the terminal input becomes 3 V. In this case, the resistors 251, 252, 254 of the amplifier 161 exhibit the d.c. compensation function such that the output $V_2$ of the operational amplifier 248 becomes 4 V, as shown in fig. 9. Further, the operational amplifier 248 is an inverting amplifier in which when the input $V_1$ increases, the output $V_2$ tends to decrease. Since the output $V_2$ is the gate input of the FET 208 of the AGC circuit 160, $V_1$ increases with increasing BGL whereas $V_2$ decreases so that the gain G also decreases and the AGC operates. Here, the AGC circuit 160 starts operating from $V_2 = 3\,V$ and $Z_F$ remains constant within the range of 3 to 4 V.

The operational amplifier 226 of the knock signal clamping circuit 116A is a buffer disposed for impedance conversion. When the non-inverting terminal voltage $V_1$ is about to exceed 5 V, the comparator 228 becomes conductive and a current flows through the diode 227 and the resistor 230 so that the terminal voltage of the non-inverting terminal of the operational amplifier 226 is clamped to a maximum of 5 V. For this reason, the inverting output voltage (background voltage level) of the comparator 118 which comprises an operational amplifier 245 does not vary depending on the intensity of knocking, and the detection of knocking does not become difficult with increasing BGL at the time of knocking.

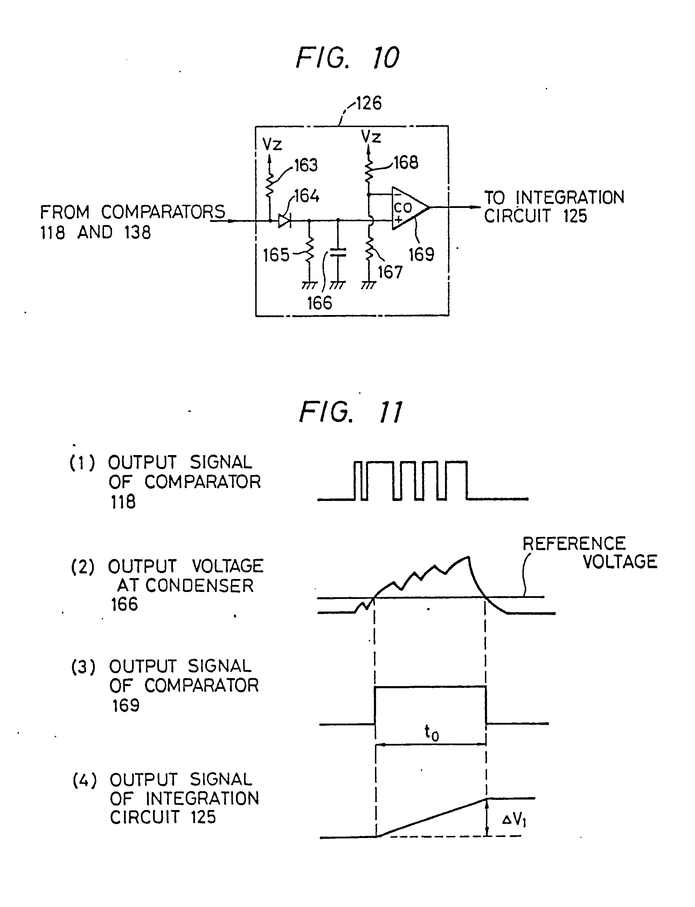

The output of the comparator 118 may be directly applied to the integration circuit 125 or be produced via the retard angle setting circuit 126. Fig. 10 shows the construction of the retard angle setting circuit 126 in this case, which consists of resistors 163, 165, 167, 168, a diode 164, a capacitor 166 and a comparator 169. Fig. 11 shows the corresponding operation waveform.

$V_Z$ in fig. 10 is connected to the $\dot{V}_Z$ terminal of the integration circuit of fig. 12 to be described later. The comparators 118 and 138 produce pulse waveforms such as shown in fig. 11(1). As the capacitor 116 is repeatedly charged and discharged, the output of the comparator 118 becomes such as shown in fig. 11(2). On the other hand, the comparator 169 compares the output at the capacitor 166 with the reference voltage $V_Z$ and obtains a pulse output of a pulse width $t_0$ which is greater than the reference voltage and corresponds to the output at the capacitor 166. This output is applied to the integration circuit 125 and leads to an integration output such as shown in fig. 11(4).

The integration circuit 125 shown in fig. 12 consists of a mirror integration circuit 140, a maximum clamping circuit 141, a minimum clamping circuit 142, resistors 50, 67, 60, 64, 65, 62, 63, 66, 49, transistors 74, 76, 79, an advance angle setting circuit 127 and a Zener diode 80. The mirror integration circuit 140 consists of an operational amplifier 35 and capacitors 71, 72. The maximum clamping circuit 141 consists of resistors 51, 52, 53, 56, a diode 83 and an operational amplifier 86. The minimum clamping circuit 142 consists of resistors 54, 55, a diode 84 and an operational amplifier 87.

An advance angle circuit for engine start 201 consists of resistors 68, 69, 70, 59, 61, 57, 58, transistors 73, 75, 78, a Zener diode 81 and a diode 82.

Furthermore, the transistor 77 is subjected to the ON-OFF control by the inverting output of the monostable circuit (multivibrator) 128 due to the transistor 203 (the inverting output of fig. 2(2). These transistors 203 and 77 (Tr 77 is OFF at $t_1$ in fig. 2(2)) correspond to the advance angle setting circuit 127. The reference potential (3 V) from the operational amplifier 33 shown in fig. 3 and serving as a buffer is applied to the emitter of this transistor 77. The transistor 74 is controlled by the short and open detectors 108, 109 shown in fig. 3. The transistor 76 is controlled by the output signal from the retard angle setting circuit 126 which is actuated by the output of the comparator 118. Further, the output of the mirror integration circuit 140 is applied to a retard circuit 132 via the resistor 49.

Next, the operation of the integration circuit 125 shown in Fig. 12 will be described.

The transistor 76 is turned ON in synchronism with the knock signal which is the output of the retard angle setting circuit 126. Accordingly, as shown in fig. 2(7), the transistor 76 becomes conductive during the period of the pulse width $t_0$ of the knock signal (approximately 1 to 1.5 ms) and the current $I_1$ flows to the ground from the operational amplifier 85 through the capacitors 72, 71, the resistor 60 and the transistor 76. The output voltage of the operational amplifier 33 at this time is 3 V.

Accordingly, the voltage rise ratio $\Delta V_1$ (voltage rise/pulse) per pulse of the operational amplifier 85 in this instance is given by the following equation:

$$I_1 = \frac{3}{R_{60}} \tag{5}$$

Hence,

$$\Delta V_1 = \frac{I_1}{C} t_0 \tag{6}$$

where the capacitance C is the series capacitance of the capacitors 71 and 72 and $R_{60}$ is the resistance of the resistor 60.

As is obvious from the equation (6), the output voltage of the operational amplifier 85 increases in proportion to the number of the knocking pulses, i.e. the pulse width $t_0$.

On the other hand, the inverting output of the monostable circuit 128 is applied from the transistor 203 to the base of the transistor 77 for every period and the transistor 77 is turned off during the predetermined mask time $t_1$. In this period, the current $I_2$ flows from the power source $V+$ to the operational amplifier 85 through the resistor 66, 67 and the capacitors 71, 72. The Zener voltage of the Zener diode 80 is 6 V. The negative terminal of the operational amplifier 85 is $-3$ V. Accordingly, whenever one pulse is applied from the monostable circuit 128 to the operational amplifier 85, the output voltage of the operational amplifier 85 drops in accordance with the following voltage drop ratio $\Delta V_2$ (voltage drop value/period):

$$I_2 = \frac{6-3}{R_{66}+R_{67}} \qquad (7)$$

Hence,

$$\Delta V_2 = \frac{I_2}{C} t_1 \qquad (8)$$

where $R_{66}$ and $R_{67}$ represent the resistance values of the resistors 66 and 67, respectively.

This voltage drop ratio $\Delta V_2$ is set to approximately 1/50, or below, of the voltage rise ratio $\Delta V_1$ in consideration of the engine power and torque. The maximum value of the integrator output is clamped by the clamp voltage of the maximum clamping circuit 141 and its minimum value by the clamp voltage of the minimum clamping circuit 142.

At the start of the engine, the integration circuit 125 is provided with a specific advance angle characteristic (advance angle value) by the advance angle circuit for start 201. This advance angle characteristic is given by the retard circuit 132. As the retard circuit 132, it is possible to employ a circuit such as disclosed in the US Patent Application Serial No. 80 202 filed October 1, 1979.

Next, the operation of the retard circuit 132 will be explained.

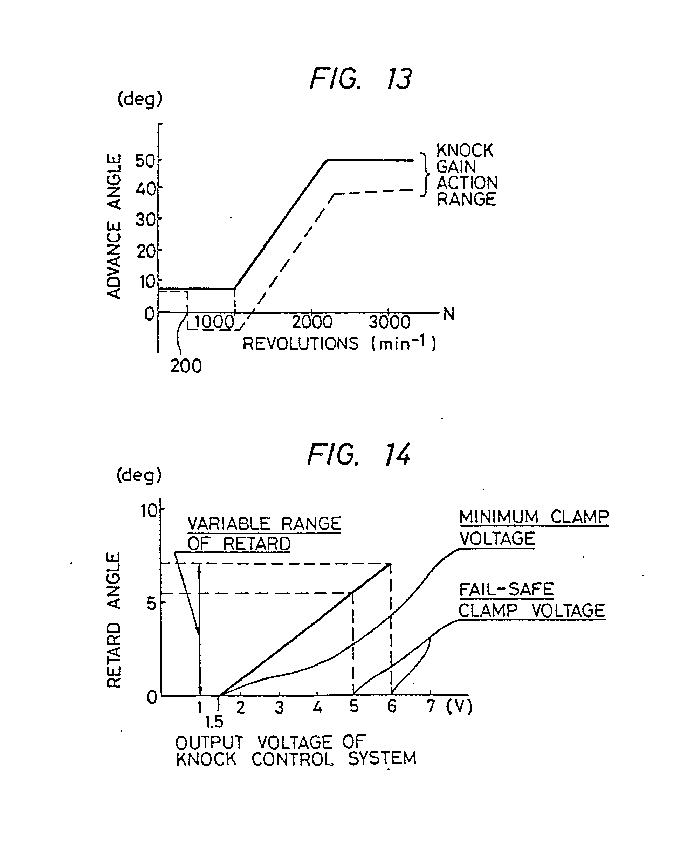

The spark timing characteristic is generally relative and is determined by a distributor and a certain operation mode which is in turn determined by the ignition device to be employed. Further, the maximum retard angle characteristic at the time of knocking is given by the spark timing characteristic so that the latter gets on the former at the timer of knocking. Fig. 13 shows the advance angle and retard angle characteristic, whereby the solid line represents the minimum retard angle characteristic in a certain operation mode (that is to say, the minimum clamp voltage) while the dashed line represents the maximum retard angle characteristic at the time of knocking (that is to say, the maximum clamp voltage). At the low speed operation of the engine such as at below 200 $\text{min}^{-1}$, control is so made as to attain the maximum advance angle characteristic determined by the spark timing characteristic. Such a characteristic is employed in order to reliably ensure smooth starting of the engine. Namely, if the spark timing is retarded at the engine start, the engine may cause reverse rotational torque and the load of the starter may become extremely high. Accordingly, the driving current of the starter becomes abnormally high in such a case, and the starter cannot rotate the engine, the result being a so-called start failure. To eliminate such start failures, control is so made as to attain the maximum advance angle characteristic determined by the spark timing characteristic at the engine start such as at a speed of 200 $\text{min}^{-1}$, for example.

The characteristic of the retard circuit 132 to accomplish the above-mentioned feature is shown in fig. 14. As shown, the circuit has such a retard characteristic as to exhibit a predetermined angle inclination characteristic with respect to the output of the integration circuit 125, that is, the output voltage of the mirror integration circuit 140. This attains the advance of a predetermined angle for each period. Namely, the spark timing is controlled in such a direction that it retards the angle in response to the number of knocking pulses or the pulse width and advances the angle by a predetermined angle in each period.

Next, the operation of the integration circuit 125 for controlling the retard circuit 132, especially the measures taken at the engine start by means of the advance angle circuit for start 201, will be described. The Zener diode 81 has a Zener voltage of about 6 V. When the power source voltage $(V+)$ is low, that is, at the engine start when the starter is turned on, the intermediate voltage between the resistors 68 and 69 cannot turn on the Zener diode 81. Hence, the transistor 73 is turned off while the transistors 75 and 78 are turned on. At this time, the transistor 76 is turned off. As the transistor 78 is turned on, a current flows from the power source through the resistor 57 in the same direction as the current $I_2$ so that the output of the operational amplifier 85 decreases down to a voltage which is equal to the voltage at point (k) and is clamped. This voltage at point (k) corresponds to the minimum clamp voltage (1.5 V) shown in fig. 14. The output thus clamped sets (to about 200 $\text{min}^{-1}$) the minimum retard angle characteristic at the engine start indicated by the solid line in fig. 13. In this manner, the retard circuit 132 is controlled and is set to the minimum retard angle characteristic.

As shown in fig. 12, the retard angle control signal from the retard angle setting circuit 126 and the advance angle control signal from the advance angle setting circuit 127 are applied to the mirror integration circuit 140 of the integration circuit 125, whereby both controls are effected for retard angle and advance angle. As both retard angle and advance angle controls are effected by the single mirror integration circuit, the accuracy of knocking control can be improved.

Next, the operation of the integration circuit 125 at the time of failure of the sensor 100 will be described.

The transistor 74 is turned off by the output from the sensor short detector 108 and that from the sensor open detector 109 shown in fig. 3, respectively, while the transistors 76 and 79 are turned on. When the transistor 76 is turned on, the current $I_1$ keeps flowing through the capacitors 71, 72 in the same way as in the above-mentioned angle retard operation and consequently, the output voltage of the operational amplifier 85 is clamped at 6 V (maximum voltage) that is the same as the voltage at point h). Further, since the transistor 79 is turned on, the voltage at point (h) is controlled to a 5 V fail-safe voltage that is lower than the normal voltage as shown in fig. 10. Thus, a suitable angle retard characteristic can be obtained even in an abnormal case.

Incidentally, if the transistor 79 is destroyed, the fail-safe clamp voltage becomes 6 V as shown in fig. 14. Whether the fail-safe voltage is to be set to 5 V or 6 V depends on the engine performance.

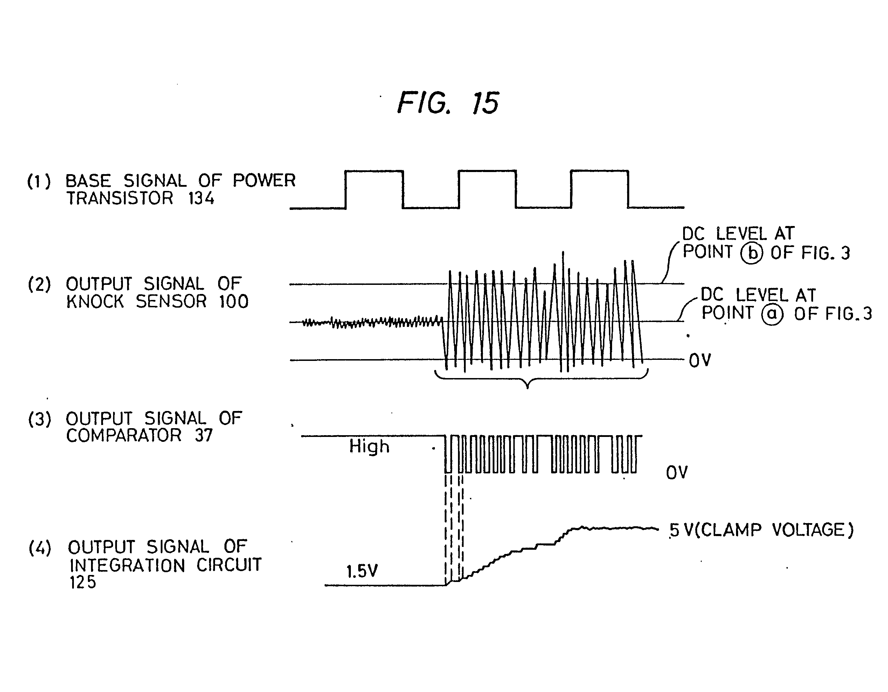

Fig. 15 shows the operation waveform diagram when the abnormal voltage overlaps at point (a) of fig. 13. This detection of an abnormal voltage is effected with the detectors 108 and 109 which act also as detectors of abnormal voltage. Fig. 15(1) shows the base signal of the power transistor 134. If for any reason the knock sensor 100 produces an abnormal signal, voltages higher than the voltage at point (b) are continuously produced as shown in fig. 15(2) so that the output of the comparator 37 continuously drops to 0 V as shown in fig. 15(3). Consequently, the output of the integration circuit 125 such as shown in fig. 15(4) is first increasing and is then clamped to the fail-safe clamp voltage (5.4 V in the drawing). Accordingly, the operation of the circuit is not adversely affected by abnormal voltages.

**Claims**

1. An engine knock control apparatus including

— a knock sensor (100) detecting engine knocking and producing a knock signal as output,
— a bandpass filter (114) receiving the knock signal,
— a first amplifier (115) amplifying the knock signal from the bandpass filter (114) and providing an amplified knock signal,
— an integrator (117) receiving the knock signal and providing an integrated output signal and
— a first comparator (118) receiving and comparing the integrated output signal of the integrator (117) and the amplified knock signal, thus providing a spark timing control signal to an ignition control device (103) controlling the ignition timing of an ignition coil (135),

characterized by

— an automatic gain control circuit (160) receiving and amplifying the knock signal from the bandpass filter (114),
— the integrator (117) and the first amplifier (115) being connected to receive the output signal from the automatic gain control circuit (160),
— a knock signal clamping circuit (116A) which is disposed between the automatic gain control circuit (160) and the integrator (117) and clamps the output signal of the automatic gain control circuit (160) and prevents an abnormal rise of the signal voltage of the integrator (117),
— a second amplifier (161) receiving the integrated output signal and negatively feeding it back to the automatic gain control circuit (160) which controls the amplification ratio of the knock signal in accordance with the level of the integrated output signal.

2. An engine knock control apparatus according to claim 1, characterized by a second comparator (138) being connected to receive and compare the amplified knock signal from the first amplifier (115) and a reference signal, the outputs of the first comparator (118) and the second comparator (138) being AND-connected, the AND-connected output being applied to the ignition control device (103).

3. An engine knock control apparatus according to claim 1 or 2, characterized by
an integration circuit (125) being disposed between the first comparator (118) and the ignition control device (103) and controlling the ignition control device (103) which controls the spark timing of the ignition coil (135) by means of a signal by integrating the output of the first comparator (118).

4. An engine knock control apparatus according to claim 3, characterized by
a retard angle setting circuit (126) being disposed between the first comparator (118) and the integration circuit (125) and receiving the output signal of the first comparator (118) and variably controlling the retard angle of the spark timing of the ignition coil (135) in response to the knock signal.

5. An engine knock control apparatus according to claim 3 or 4, characterized by an advance angle setting circuit (127) being disposed between the integration circuit (125) and the ignition control device (103) and receiving the output signal of the ignition control device (103) and effecting the advance angle control of the spark timing of the ignition control device (103).

6. An engine knock control apparatus according to one of claims 1 to 5, characterized by a fail-safe device (102) being disposed between the knock sensor (100) and the ignition control device (103) and consisting of a constant-current circuit (107), a sensor short detector (108) and a sensor open detector (109) and controlling the retard angle to a predetermined value by means of an upper and a lower limit setting voltage for detecting normal and abnormal conditions of the knock sensor, the fail-safe device (102) detecting normal conditions when the detected voltage of the knock sensor (100) is within the range of the setting voltages and detecting abnormal conditions and retarding the angle of the spark timing of the ignition control device (103) to a predetermined value by its output when the detected voltage is out of the range of the setting voltages.

7. An engine knock control apparatus according to one of claims 1 to 6, characterized by an ignition noise cut circuit (113) being disposed between the knock sensor (100) and the integrator (117) and cutting the output from the knock sensor (100) to the integrator (117) in response to the output of the ignition control device (103) and preventing erroneous operation of the engine knock control apparatus due to the ignition noise generated at the time of ignition by the ignition coil (135).

8. An engine knock control apparatus according to one of claims 1 to 7, characterized by an advance angle circuit (201) for the engine start being disposed between the first comparator (118) and the ignition control device (103) and detecting the engine start and clamping the ignition timing at a predetermined value.

**Patentansprüche**

1. Vorrichtung zur Kontrolle des Klopfens von Brennkraftmaschinen, mit

— einem Klopffühler (100), der Klopfen des Motors erfaßt und als Ausgangssignal ein Klopfsignal erzeugt,
— einem Bandpaß (114), der das Klopfsignal empfängt,
— einem ersten Verstärker (115), der das Klopfsignal vom Bandpaß (114) verstärkt und ein verstärktes Klopfsignal erzeugt,
— einem Integrierer (117), der das Klopfsignal empfängt und ein integriertes Ausgangssignal erzeugt, und
— einem ersten Vergleicher (118), der das integrierte Ausgangssignal des Integrierers (117) und das verstärkte Klopfsignal empfängt und miteinander vergleicht, so daß ein Zündzeitpunkt-Einstellsignal für eine Zündungseinstellvorrichtung (103) erzeugt wird, die den Zündzeitpunkt einer Zündspule (135) bestimmt,

gekennzeichnet durch

— eine Verstärkungsregelschaltung (160), die das Klopfsignal vom Bandpaß (114) empfängt und verstärkt,
— wobei der Integrierer (117) und der erste Verstärker (115) so geschaltet sind, daß sie das Ausgangssignal der Verstärkungsregelschaltung (160) empfangen,
— ein Klopfsignal-Halteglied (116A), das zwischen die Verstärkungsregelschaltung (160) und den Integrierer (117) geschaltet ist und das Ausgangssignal der Verstärkungsregelschaltung (160) hält und einen abnormalen Anstieg der Signalspannung des Integrierers (117) verhindert,
— einen zweiten Verstärker (161), der das integrierte Ausgangssignal empfängt und es zur Verstärkungsregelschaltung (160) negativ rückführt, wobei die Verstärkungsregelschaltung das Verstärkungsverhältnis des Klopfsignals nach Maßgabe des Pegels des integrierten Ausgangssignals regelt.

2. Vorrichtung zur Kontrolle des Klopfens von Brennkraftmaschinen nach Anspruch 1, gekennzeichnet durch einen zweiten Vergleicher (138), der so geschaltet ist, daß er das verstärkte Klopfsignal vom ersten Verstärker (115) und ein Bezugssignal empfängt und miteinander vergleicht, wobei die Ausgänge des ersten Vergleichers (117) und des zweiten Vergleichers (138) UND-verknüpft sind und das UND-verknüpfte Ausgangssignal an die Zündungseinstellvorrichtung (103) angelegt wird.

3. Vorrichtung zur Kontrolle des Klopfens von Brennkraftmaschinen nach Anspruch 1 oder 2, gekennzeichnet durch ein Integrierglied (125), das zwischen dem ersten Vergleicher (118) und der Zündungseinstellvorrichtung (103) liegt und die Zündungseinstellvorrichtung (103), die den Zündzeitpunkt der Zündspule (135) mit einem Signal einstellt, durch Integration des Ausgangssignals des ersten Vergleichers (118) ansteuert.

4. Vorrichtung zur Kontrolle des Klopfens von Brennkraftmaschinen nach Anspruch 3, gekennzeichnet durch ein Verzögerungswinkel-Stellglied (126), das zwischen dem ersten Vergleicher (118) und dem Integrierglied (125) liegt und das Ausgangssignal des ersten Vergleichers (118) empfängt und den Zündzeitpunkt-Verzögerungswinkel der Zündspule (135) aufgrund des Klopfsignals veränderlich einstellt.

5. Vorrichtung zur Kontrolle des Klopfens von Brennkraftmaschinen nach Anspruch 3 oder 4, gekennzeichnet durch ein Zündverstellwinkel-Stellglied (127) zwischen dem Integrierglied (125) und der Zündungseinstellvorrichtung (103), das das Ausgangssignal der Zündungseinstellvorrichtung (103) empfängt und die Zündverstellwinkeleinstellung des Zündzeitpunkts der Zündungseinstellvorrichtung (103) bewirkt.

6. Vorrichtung zur Kontrolle des Klopfens von Brennkraftmaschinen nach einem der Ansprüche 1—5, gekennzeichnet durch eine zwischen dem Klopffühler (100) und der Zündungseinstellvorrichtung (103) liegende Failsafe-Stufe (102), bestehend aus einem Konstantstromglied (107), einem Fühlerkurzschluß-Detektor (108) und einem Fühler-offen-Detektor (109), zur Regelung des Verzögerungswinkels auf einen vorbestimmten Wert mittels einer Obergrenz- und Untergrenze-Einstellspannung zur Erfassung normaler und abnormaler Zustände des Klopffühlers, wobei die Failsafe-Stufe (102) Normalzustände erfaßt, wenn die erfaßte Spannung des Klopffühlers (100) im Bereich der Einstellspannungen liegt, und abnormale Zustände erfaßt und mittels ihres Ausgangssignals den Zündwinkel der Zündungseinstellvorrichtung (103) auf einen vorbestimmten Wert einstellt, wenn die erfaßte Spannung außerhalb des Bereichs der Einstellspannungen lieft.

7. Vorrichtung zur Kontrolle des Klopfens von Brennkraftmaschinen nach einem der Ansprüche 1—6, gekennzeichnet durch ein zwischen dem Klopffühler (100) und dem Integrierer (117) liegendes Zündgeräusch-Blockierglied (113), das das Ausgangssignal vom Klopffühler (100) zum Integrierer (117) aufgrund des Ausgangssignals der Zündungseinstellvorrichtung (103) blockiert und fehlerhaften Betrieb der Klopfkontrollvorrichtung infolge des zum Zündzeitpunkt von der Zündspule (135) erzeugten Zündgeräuschs verhindert.

8. Vorrichtung zur Kontrolle des Klopfens von Brennkraftmaschinen nach einem der Ansprüche 1—7, gekennzeichnet durch ein Zündverstellwinkelglied (201) für den Motorstart, das zwischen dem ersten Vergleicher (118) und der Zündungseinstellvorrichtung (103) liegt und den Motorstart erfaßt und den Zündzeitpunkt auf einem vorbestimmten Wert hält.

**Revendications**

1. Dispositif de contrôle du cognement dans un moteur, comprenant

— un capteur de cognement (100) détectant le cognement du moteur et produisant un signal de commande en tant que signal de sortie,
— un filtre passe-bande (114) recevant le signal de cognement,
— un premier amplificateur (115) amplifiant le signal de cognement délivré par le filtre passe-bande (114) et délivrant un signal de cognement amplifié,
— un intégrateur (117) recevant le signal de cognement et délivrant un signal de sortie intégré, et
— un premier comparateur (118) recevant et comparant le signal de sortie intégré de l'intégrateur (117) et le signal de cognement amplifié, en envoyant un signal de commande d'avance à l'allumage à un dispositif de commande d'allumage (103) commandant l'avance à l'allumage d'une bobine d'allumage (135),

caractérisé par

— un circuit (160) de commande automatique de gain, recevant et amplifiant le signal de cognement délivré par le filtre passe-bande (114),
— l'intégrateur (117) et le premier amplificateur (115) étant raccordés de manière à recevoir le signal de sortie délivré par ledit circuit (160) de commande automatique de gain,
— un circuit (116A) de verrouillage du signal de cognement, qui est monté entre le circuit (160) de commande automatique de gain et l'intégrateur (117) et verrouille le signal de sortie du circuit (160) de commande automatique de gain et empêche un montée anormale de la tension du signal de l'intégrateur (117),
— un second amplificateur (161) recevant le signal de sortie intégré et le renvoyant par contre-réaction au circuit (160) de commande automatique de gain, qui commande le taux d'amplification du signal de cognement conformément au niveau du signal de sortie intégré.

2. Dispositif de contrôle du cognement d'un moteur selon la revendication 1, caractérisé par un second comparateur (138) qui est raccordé de manière à recevoir et comparer le signal de cognement amplifié délivré par le premier amplificateur (115) et un signal de référence, les sorties du premier comparateur (118) et du second comparateur (138) étant raccordées selon la combinaison ET, le signal de sortie produit par la combinaison ET étant envoyé au dispositif de commande d'allumage (103).

3. Dispositif de contrôle du cognement d'un moteur selon la revendication 1 ou 2, caractérisé par

— un circuit d'intégration (125) qui est monté entre le premier comparateur (118) et le dispositif de commande d'allumage (103) et qui commande le dispositif de commande d'allumage (103) qui commande l'avance à l'allumage de la bobine d'allumage (135) au moyen d'un signal, grâce à l'intégration du signal de sortie délivré par le premier comparateur (118).

4. Dispositif de contrôle du cognement d'un moteur selon la revendication 3, caractérisé par

— un circuit (126) de réglage de l'angle de retard, qui est monté entre le premier comparateur (118) et le circuit d'intégration (125) et qui reçoit le signal de sortie du premier comparateur (118) et commande de façon variable l'anble de retard de l'avance à l'allumage de la bobine d'allumage (135) en réponse au signal de cognement.

5. Appareil de contrôle du cognement d'un moteur selon la revendication 3 ou 4, caractérisé par un circuit (127) de réglage de l'angle d'avance, qui est disposé entre le circuit d'intégration (125) et le dispositif de commande d'allumage (103) et qui reçoit le signal de sortie du dispositif de commande d'allumage (103) et réalise la commande de l'angle d'avance de l'avance à l'allumage du dispositif de commande d'allumage (103).

6. Dispositif de contrôle du cognement d'un moteur selon l'une des revendications 1 à 5, caractérisé par un dispositif (102) à fonctionnement sûr en case de défaillance, qui est monté entre le capteur de cognement (100) et le dispositif de commande d'allumage (103) et est constitué par un circuit à courant constant (107), par un détecteur (108) du court-circuit du capteur et un détecteur (109) de l'état ouvert du capteur et qui règle l'angle de retard à une valeur prédéterminée au moyen d'une tension de réglage limite supérieure et inférieure pour la détection de conditions normales et anormales du capteur de cognement, le dispositif (102) à fonctionnement sûr en cas de défaillance détectant des conditions normales lorsque la tension détectée du capteur de cognement (100) se situe dans la gamme des tensions de réglage et détectant des conditions anormales et retardant l'angle d'avance à l'allumage du dispositif de commande d'allumage (103) à une valeur prédéterminée, par son signal de sortie, lorsque la tension détectée se situe en-dehors de la gamme des tensions de réglage.

7. Dispositif de contrôle du cognement d'un moteur selon l'une des revendications 1 à 6, caractérisé par un circuit (113) d'interruption du bruit d'allumage, qui est monté entre le capteur de cognement (100) et l'intégrateur (117) et qui interrompt le signal de sortie délivré par le capteur de cognement (100) à l'intégrateur (117) en réponse au signal de sortie du dispositif de commande d'allumage (103) et empêche un fonctionnement erroné du dispositif de contrôle de cognement du moteur, dû au bruit d'allumage produit par la bobine d'allumage (135) au moment de l'allumage.

8. Dispositif de contrôle de cognement d'un moteur selon l'une des revendications 1 à 7, caractérisé par un circuit (201) de réglage de l'angle d'avance pour le démarrage du moteur, qui est disposé entre le premier comparateur (118) et le dispositif de commande d'allumage (103) et détecte le démarrage du moteur et verrouille l'avance à l'allumage à une valeur prédéterminée.

# FIG. 1

# FIG. 2

(1) WAVE FORM OF SPARK TIMING

(2) OUTPUT SIGNAL OF MONOSTABLE CIRCUIT 128

(3) OUTPUT SIGNAL OF KNOCK SENSOR 100 IN ⓐ POINT OF FIG. 3

(4) OUTPUT SIGNAL OF IGNITION NOISE CUT CIRCUIT 113

(5) OUTPUT SIGNAL OF BACKGROUND LEVEL CIRCUIT 119 (FIG. 8Ⓧ) AND AMP 115 OUTPUT (FIG. 8Ⓨ)

(6) OUTPUT SIGNAL OF COMPARATOR 118

(7) OUTPUT SIGNAL OF RETARD ANGLE SETTING CIRCUIT 126

(8) OUTPUT SIGNAL OF INTEGRATION CIRCUIT 125

SPARK TIMING

ON | OFF | ON | OFF | ON

BASE SIGNAL OF POWER TRANSISTOR 134

$t_1$

KNOCK SIGNAL     IGNITION NOISE

DC LEVEL AT POINT ⓐ OF FIG 3

0V

0V

OUTPUT VOLTAGE OF BACKGROUND LEVEL CIRCUIT 119 (FIG. 8Ⓧ)

DC LEVEL AT POINT ⓕ OF FIG. 3

0V

0V

$t_0$

$\Delta V_1$

1.5V

0 047 394

FIG. 3

TO EMITTER OF TRANSISTOR 203

TO + TERMINAL OF OPERATIONAL AMPLIFIER 248

TO 204 OF AUTOMATIC GAIN CONTROL CIRCUIT 160

TO 74 OF INTEGRATION CIRCUIT 125

FROM MONOSTABLE CIRCUIT 128

# FIG. 4

## (A)

## (B)

## (C)

4

## FIG. 5

TO GATE 113

+3(V)

## FIG. 6

FROM 114 → AUTOMATIC GAIN CONTROL CIRCUIT 160

HALF-WAVE RECTIFIER 116 → KNOCK SIGNAL CLAMPING CIRCUIT 116A → INTEGRATOR 117 → AMPLIFIER 117A — 119

AMPLIFIER 115

AMPLIFIER 161

CO 118

CO 138

Vz

148

149

TO RETARD ANGLE SETTING CIRCUIT 126

0 047 394

## FIG. 7

OUTPUT ——▸V₀ (mV)

100

— LOW SPEED

0 25 50 75 100 125 150 175 200 (mV)

INPUT ——▸V

VL VH

## FIG. 9

OUTPUT VOLTAGE OF OPERATIONAL AMPLIFIER 248

——▸V₂ (V)

$Z_F \approx$ CONSTANT

$Z_F$ = LARGER

$Z_F \approx 200\,\Omega$

$Z_F \approx 12\,k\Omega$

0 3 4 5 (V)

——▸V₁

INPUT VOLTAGE TO OPERATIONAL AMPLIFIER 245

6

FIG. 8

## FIG. 10

126

Vz
163
164
Vz
168

FROM COMPARATORS
118 AND 138

165
166
167
169

CO
+

TO INTEGRATION
CIRCUIT 125

## FIG. 11

(1) OUTPUT SIGNAL
OF COMPARATOR
118

(2) OUTPUT VOLTAGE
AT CONDENSER
166

REFERENCE
VOLTAGE

(3) OUTPUT SIGNAL
OF COMPARATOR
169

$t_0$

(4) OUTPUT SIGNAL
OF INTEGRATION
CIRCUIT 125

$\Delta V_1$

8

FIG. 12

TO RETARD CIRCUIT 132

FROM MONOSTABLE CIRCUIT 128
FROM OPERATIONAL AMPLIFIER 33

FROM SENSOR SHORT DETECTOR 108 AND SENSOR OPEN DETECTOR 109

FROM RETARD ANGLE SETTING CIRCUIT 126

## FIG. 13

(deg)

ADVANCE ANGLE

KNOCK GAIN ACTION RANGE

REVOLUTIONS (min⁻¹)

200

## FIG. 14

(deg)

RETARD ANGLE

VARIABLE RANGE OF RETARD

MINIMUM CLAMP VOLTAGE

FAIL-SAFE CLAMP VOLTAGE

1.5

OUTPUT VOLTAGE OF KNOCK CONTROL SYSTEM

## FIG. 15

(1) BASE SIGNAL OF POWER TRANSISTOR 134

(2) OUTPUT SIGNAL OF KNOCK SENSOR 100

DC LEVEL AT POINT (b) OF FIG. 3

DC LEVEL AT POINT (a) OF FIG. 3

0V

(3) OUTPUT SIGNAL OF COMPARATOR 37

High

0V

(4) OUTPUT SIGNAL OF INTEGRATION CIRCUIT 125

1.5V

5V(CLAMP VOLTAGE)

0 047 394